# EUROPÄISCHE PATENTANMELDUNG

(11) **EP 1 591 728 A2**
(43) Veröffentlichungstag der Anmeldung: **02.11.2005**
(21) Anmeldenummer: 05008978.8
(22) Anmeldetag: 25.04.2005
(51) Int. Cl.: F24D 3/18, F24D 3/12, F24D 12/02

(54) **Heiz-und/oder Kühleinrichtung**

(30) Priorität: 27.04.2004 DE 102004020611
(71) Anmelder: Klein, Dan, 24959 Tefen (IL)
(72) Erfinder: Klein, Dan, 24959 Tefen (IL)
(74) Vertreter: Gornott, Dietmar

(57) **Zusammenfassung**

Eine Heizeinrichtung für Räume mit einem Außengerät einer Klimaanlage besteht darin, dass an das Außengerät über einen Wärmetauscher eine Fußbodenheizung angeschlossen ist. Bei einer Heiz- und Kühleinrichtung für Räume mit einer zweiteiligen Klimaanlage, die aus einem Außengerät und einem Innengerät besteht, ist an den Kühl-/Heizmittelkreislauf zwischen Außengerät und Innengerät über einen Wärmetauscher eine Fußbodenheizung angeschlossen.

## Beschreibung

Die Erfindung betrifft eine Heiz- und/oder Kühleinrichtung für Räume mit einer Klimaanlage, die mindestens aus einem Außengerät besteht.

Durch zunehmende Ansprüche an Wohnkomfort bzw. Komfort am Arbeitsplatz und allgemeine Klimaerwärmung werden Klimaanlagen immer häufiger eingesetzt. Bei diesen Klimaanlagen unterscheidet man unter anderem zwischen Monoblockgeräten, die meistens mobil ausgeführt sind, oder sogenannten Split-Systemen, die aus einem Außengerät und einem Innengerät bestehen. Diese Geräte werden in Abhängigkeit von der Region meist nur für kurze Zeit, beispielsweise zwei bis vier Monate des Jahres, benutzt. Es ist ferner möglich, solche Klimaanlagen reversibel zu betreiben, das heißt, sowohl für die Kühlung als auch für die Heizung von Räumen bzw. Häusern.

Beim Betrieb zum Heizen stellt es sich jedoch als nachteilig heraus, dass die warme Luft in den zu heizenden Raum relativ hoch eingeleitet wird, was für eine Kühlung an sich günstig, für eine Heizung jedoch ungünstig ist. Will man keine allzu starke für das Wohlbefinden der in dem Raum befindlichen Person ungünstige Luftströmung erzeugen, bleibt der untere Teil des Raumes einschließlich des Fußbodens kühl, was von der Person als unbehaglich empfunden wird. Außerdem sinkt die relative Luftfeuchtigkeit der Luft beim Erwärmen, was ebenso wie der kalte Fußboden und die kältere Luft in den unteren Bereichen des Raumes zu gesundheitlichen Problemen führen kann.

Die Erfindung hat die Aufgabe, diese Nachteile mit möglichst einfachen Mitteln zu vermeiden, und löst diese Aufgabe bei einer Heizeinrichtung dadurch, dass an das Außengerät über einen Wärmetauscher eine Fußbodenheizung angeschlossen ist.

Bei einer Heiz- und Kühleinrichtung wird die Aufgabe dadurch gelöst, dass an den Kühl-/Heizmittelkreislauf zwischen Außengerät und Innengerät über einen Wärmetauscher eine Fußbodenheizung angeschlossen ist.

Vorzugsweise ist bei der erfindungsgemäßen Einrichtung vorgesehen, dass die Fußbodenheizung einen Heizmittelkreislauf aufweist mit einer Umwälzpumpe, einem Ausgleichsgefäß und Verteileinrichtungen auf mehrere in dem Fußboden verlegte Heizkreise.

Die als Heiz- und Kühleinrichtung ausgebildete erfindungsgemäße Einrichtung gestattet im Sommer die Nutzung bewährter Klimaanlagen, während im Winter eine komfortable Wärme durch die Fußbodenheizung erzeugt wird - wie auch bei der erfindungsgemäßen Heizeinrichtung. Die Erfindung hat ferner den Vorteil, dass die Komponenten von Split-Systemen, wie Außen- und Innengerät, in großen Stückzahlen preiswert hergestellt werden.

Je nach räumlichen Voraussetzungen kann die erfindungsgemäße Einrichtung derart ausgebildet sein, dass der Wärmetauscher, die Umwälzpumpe, das Ausgleichsgefäß und die Verteileinrichtungen in einer Baugruppe angeordnet sind oder dass der Wärmetauscher und die Umwälzpumpe in einer ersten Baugruppe und das Ausgleichsgefäß und die Verteileinrichtungen in einer zweiten Baugruppe angeordnet sind.

Während bei mittleren Temperaturen ein Heizen allein durch den inversen Betrieb des Außengerätes möglich ist, reicht dies bei niedrigeren Temperaturen in der Regel nicht aus. Bei einer vorteilhaften Ausgestaltung der Erfindung ist daher im Heizmittelkreislauf ferner eine elektrische Heizvorrichtung vorgesehen.

Eine Weiterbildung der Erfindung ermöglicht einen an die jeweilige Temperatur angepassten Betrieb dadurch, dass eine Steuereinrichtung vorgesehen ist, welche derart wirkt, dass in einem ersten Bereich der Außentemperatur die elektrische Heizvorrichtung eingeschaltet ist, dass in einem zweiten Bereich die Klimaanlage bei abgeschalteter elektrischer Heizvorrichtung auf Heizen geschaltet ist, dass in einem dritten Bereich die Heiz- und Kühleinrichtung abgeschaltet ist und dass in einem vierten Bereich die Klimaanlage auf Kühlen geschaltet ist. Dabei hat es sich für die meisten Anwendungsfälle als günstig herausgestellt, dass sich etwa der erste Bereich von -30°C bis +2°C, der zweite Bereich von +2°C bis +15°C und der dritte Bereich von +15°C bis +25°C erstreckt und dass der vierte Bereich oberhalb von etwa +25°C liegt.

Ausführungsbeispiele der Erfindung sind in der Zeichnung anhand mehrerer Figuren dargestellt und in der nachfolgenden Beschreibung näher erläutert. Es zeigt:
- Fig. 1: schematisch ein erstes Ausführungsbeispiel,
- Fig. 2: ein zweites Ausführungsbeispiel,
- Fig. 3: ein Beispiel für die Anordnung des ersten Ausführungsbeispiels in einem Haus und
- Fig. 4: ein Beispiel für die Anordnung des zweiten Ausführungsbeispiels.

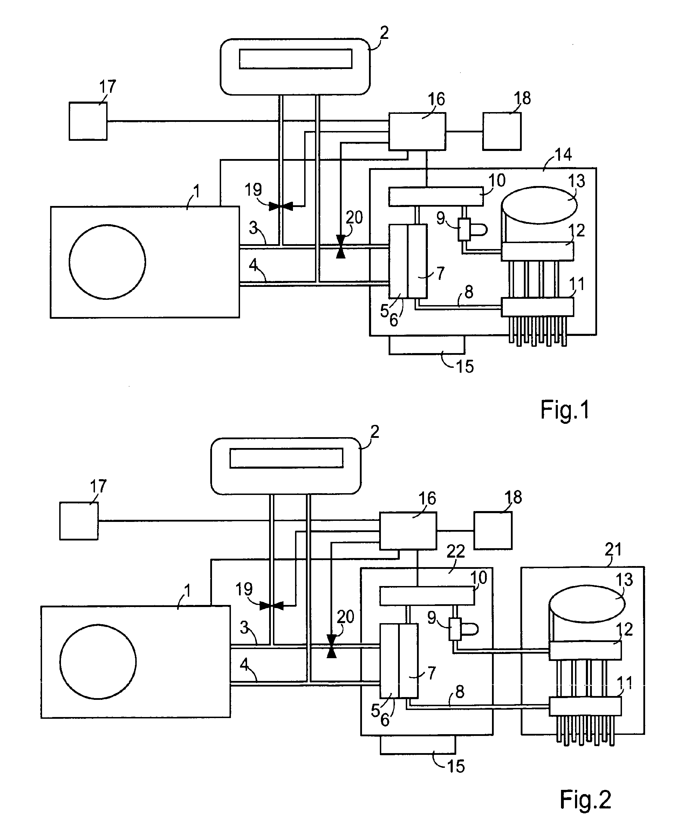

Die Ausführungsbeispiele nach den Figuren 1 und 2 weisen jeweils eine an sich bekannte Klimaanlage mit einem Außengerät 1 und einem Innengerät 2 auf. Das Außengerät enthält einen Kompressor sowie einen Wärmetauscher und einen Ventilator, während das Innengerät einen Wärmetauscher und einen Ventilator enthält, was in den Figuren nicht dargestellt ist, da es an sich bekannt ist und zur Erläuterung der Erfindung nicht notwendig ist.

Das Außengerät 1 und das Innengerät 2 sind mit zwei Leitungen 3, 4 für die Kühl- bzw. Heizflüssigkeit miteinander verbunden. An die Leitungen 3, 4, welche den Kühl-/Heizmittelkreislauf bilden, ist die Primärseite 5 eines Wärmetauschers 6 angeschlossen, dessen Sekundärseite 7 in einem Kreislauf 8 für das Heizmittel der Fußbodenheizung angeordnet ist. In diesem Kreislauf 8 liegen ferner eine Umwälzpumpe 9, eine elektrische Heizvorrichtung 10, ein Ausgangsverteiler 11, ein Eingangsverteiler 12 und ein Ausgleichsgefäß 13. Die einzelnen Leitungen für die Fußbodenheizung sind nur in ihren Endbereichen angedeutet. Eine Einzelraumregelung ist bei der Erfindung ebenfalls möglich, jedoch in den Figuren nicht dargestellt.

Die Elemente 5 bis 13 sind in einem Gehäuse 14 angeordnet. Ein Netzanschlussgerät 15 dient zur Stromversorgung der Heizvorrichtung 10, der Umwälzpumpe 9 und eines Steuergerätes 16. Diesem werden von Sensoren 17, 18 die Außen- und Innentemperaturwerte zugeführt. Es steuert die Klimaanlage 1, die Heizvorrichtung 10 sowie in dem Kühl-/Heizmittelkreislauf 3, 4 angeordnete Ventile 19, 20.

Diese Steuerung kann derart erfolgen, dass in einem ersten Bereich der Außentemperatur die elektrische Heizvorrichtung eingeschaltet ist, dass in einem zweiten Bereich die Klimaanlage bei abgeschalteter elektrischer Heizvorrichtung auf Heizen geschaltet ist, dass in einem dritten Bereich die Heiz- und Kühleinrichtung abgeschaltet ist und dass in einem vierten Bereich die Klimaanlage auf Kühlen geschaltet ist. Außerdem ist die Steuerung von der jeweiligen Innentemperatur und einer jeweils eingestellten Solltemperatur abhängig.

Während bei dem Ausführungsbeispiel nach Fig. 1 alle zum Betrieb der Fußbodenheizung erforderlichen Elemente in einem Gehäuse 14 angeordnet sind - zusammenfassend im folgenden auch Fußbodenheizungsgerät genannt -, ist bei dem Ausführungsbeispiel nach Fig. 2 eine Trennung derart vorgesehen, dass in einem weiteren Gehäuse 21 die Verteiler 11, 12 sowie das Ausgleichsgefäß 13 angeordnet sind, während ein Gehäuse 22 den Wärmetauscher 6, die Umwälzpumpe 9 und die elektrische Heizvorrichtung 10 enthält. Diese Bauform ist beispielsweise vorzuziehen, wenn in der Nähe des zu heizenden Fußbodens für die gesamte Einrichtung zu wenig Platz zur Verfügung steht.

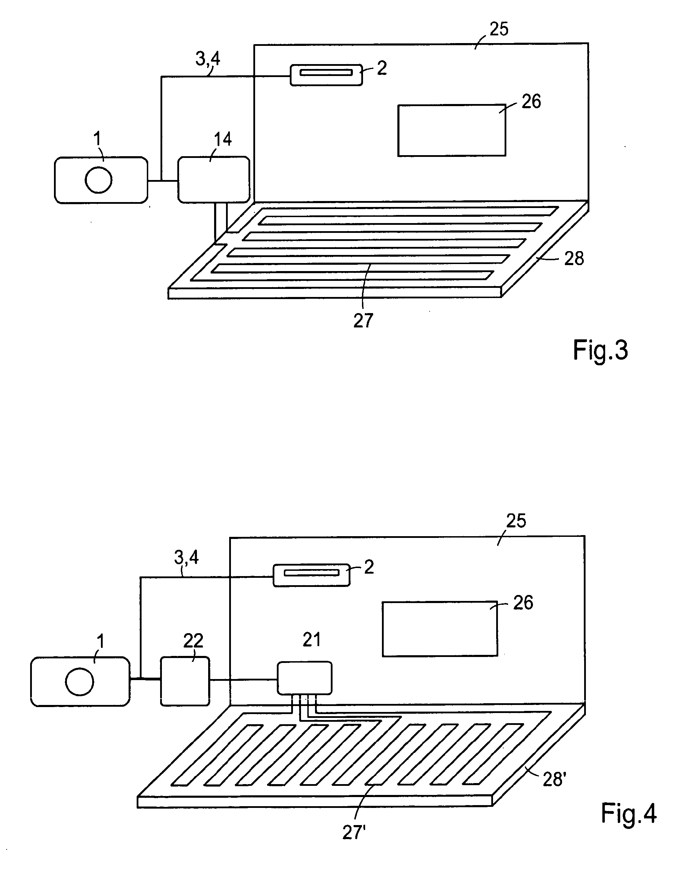

Fig. 3 zeigt ein Montagebeispiel einer Heiz- und Kühleinrichtung gemäß Fig. 1, wobei das Außengerät 1 außerhalb des Raumes angeordnet ist, während das Innengerät 2 in relativ großer Höhe an einer Wand 25 des Raumes in einem Fenster 26 befestigt ist. Das Fußbodenheizungsgerät 14 befindet sich in der Nähe des Raumes und versorgt die lediglich angedeuteten Heizrohre 27, die im Fußboden 28 verlegt sind.

Bei dem Ausführungsbeispiel nach Fig. 4 befindet sich das Gehäuse 21 mit den Verteilern 11, 12 und dem Ausgleichsgefäß 13 (Fig. 2) innerhalb des Raumes, während außerhalb des Raumes ein Gehäuse 22 mit den übrigen Teilen des Fußbodenheizgerätes vorgesehen ist. Die Heizrohre 27' im Fußboden 28' sind lediglich angedeutet.

## Patentansprüche

1. Heizeinrichtung für Räume mit einem Außengerät einer Klimaanlage, **dadurch gekennzeichnet, dass** an das Außengerät über einen Wärmetauscher (6) eine Fußbodenheizung (14, 21, 22) angeschlossen ist.

2. Heiz- und Kühleinrichtung für Räume mit einer zweiteiligen Klimaanlage, die aus einem Außengerät und einem Innengerät besteht, **dadurch gekennzeichnet, dass** an den Kühl-/Heizmittelkreislauf (3, 4) zwischen Außengerät (1) und Innengerät (2) über einen Wärmetauscher (6) eine Fußbodenheizung (14, 21, 22) angeschlossen ist.

3. Einrichtung nach einem der Ansprüche 1 oder 2, **dadurch gekennzeichnet, dass** die Fußbodenheizung (14, 21, 22) einen Heizmittelkreislauf (8) aufweist mit einer Umwälzpumpe (9), einem Ausgleichsgefäß (13) und Verteileinrichtungen (11, 12) auf mehrere in dem Fußboden verlegte Heizkreise (27, 27').

4. Einrichtung nach Anspruch 3, **dadurch gekennzeichnet, dass** der Wärmetauscher (6), die Umwälzpumpe (9), das Ausgleichsgefäß (13) und die Verteileinrichtungen (11, 12) in einer Baugruppe (14) angeordnet sind.

5. Einrichtung nach Anspruch 3, **dadurch gekennzeichnet, dass** der Wärmetauscher (6) und die Umwälzpumpe (9) in einer ersten Baugruppe (22) und das Ausgleichsgefäß (13) und die Verteileinrichtungen (11, 12) in einer zweiten Baugruppe (21) angeordnet sind.

6. Einrichtung nach einem der vorhergehenden Ansprüche, **dadurch gekennzeichnet, dass** im Heizmittelkreislauf (8) ferner eine elektrische Heizvorrichtung (10) vorgesehen ist.

7. Einrichtung nach Anspruch 6, **dadurch gekennzeichnet, dass** eine Steuereinrichtung (16) vorgesehen ist, welche derart wirkt, dass in einem ersten Bereich der Außentemperatur die elektrische Heizvorrichtung (10) eingeschaltet ist, dass in einem zweiten Bereich die Klimaanlage (1) bei abgeschalteter elektrischer Heizvorrichtung (10) auf Heizen geschaltet ist, dass in einem dritten Bereich die Heiz- und Kühleinrichtung abgeschaltet ist und dass in einem vierten Bereich die Klimaanlage (1, 2) auf Kühlen geschaltet ist.

8. Einrichtung nach Anspruch 7, **dadurch gekennzeichnet, dass** sich etwa der erste Bereich von -30°C bis +2°C, der zweite Bereich von +2°C bis +15°C und der dritte Bereich von +15°C bis +25°C erstreckt und dass der vierte Bereich oberhalb von etwa +25°C liegt.
